# EUROPÄISCHE PATENTANMELDUNG

(11) **EP 4 156 462 A1**
(43) Veröffentlichungstag der Anmeldung: **29.03.2023**
(21) Anmeldenummer: 22196610.4
(22) Anmeldetag: 20.09.2022
(51) Int. Cl.: H02K 1/14, H02K 15/02

(54) **BLDC-MOTOR**

(30) Priorität: 24.09.2021 DE 102021124743; 10.12.2021 DE 102021132720
(71) Anmelder: Hanning Elektro-Werke GmbH & Co. KG, 33813 Oerlinghausen (DE)
(72) Erfinder: Heißenberg, Stefan, 33607 Bielefeld (DE); Kubiak, Raphael Tobias, 32760 Detmold (DE); Dück, Waldemar, 33332 Gütersloh (DE); Gützlaff, Tarik, 32832 Augustdorf (DE)
(74) Vertreter: Wickord, Wiro

(57) **Zusammenfassung**

Die Erfindung betrifft einen dreiphasigen BLDC-Motor umfassend eine Rotorbaugruppe (2) mit einer in eine Axialrichtung (5) längserstreckten Motorwelle (3) und mit einem an der Motorwelle (3) montierten Permanentmagnetrotor (4) mit einem mehr als zweipoligen Permanentmagneten und umfassend eine Statorbaugruppe (1) mit einem Blechstator, mit einer Mehrzahl von Spulenkörpern (12) und mit einer Mehrzahl von Wicklungen (13), die die Spulenkörper (12) umgreifen, wobei der Blechstator segmentiert ausgebildet ist und die Statorbaugruppe (1) eine Mehrzahl von Statorsegmenten (11) vorsieht, welche in eine Umfangsrichtung (7) aneinander angesetzt sind und welche jeweils einen Teil eines Statorjochs und einen Statorzahn (14) mit einem Polschuh (15) bereitstellen, wobei jeder Statorzahn (14) einen der Spulenkörper (12) mit einer Wicklung (13) trägt und wobei jedes Statorsegment (11) in die Axialrichtung (5) gestapelte Statorbleche vorsieht.

## Beschreibung

Die Erfindung betrifft einen dreiphasigen BLDC-Motor umfassend eine Rotorbaugruppe mit einer Motorwelle und mit einem an der Motorwelle montierten Permanentmagnetrotor, wobei der Permanentmagnetrotor einen mehr als zweipoligen Permanentmagneten vorsieht, und umfassend eine Statorbaugruppe mit einem Blechstator, mit einer Mehrzahl von Spulenkörpern und mit einer Mehrzahl von Wicklungen, die die Spulenkörper umgreifen.

Aus dem Stand der Technik ist bekannt, gattungsgemäße BLDC-Motoren mit einem ringförmigen, in eine Umfangsrichtung einstückig ausgebildeten Blechstator zu realisieren. Der Blechstator sieht in Richtung eines Mittelpunkts desselben abragende Statorzähne und die Statorzähne umgreifende Spulenkörper vor, die beispielsweise um die Statorzähne gespritzt und nach dem Spritzen bewickelt werden. Die Wicklungen werden dabei aufgrund der Bauraumrestriktionen mithilfe der Nadelwickeltechnik hergestellt. Die Nadelwickeltechnik ist ein vergleichsweise langsames und damit kostenintensives Wicklungsverfahren, bei dem zugleich hohe dynamische Kräfte auftreten.

Zudem ist bekannt, die Statorbaugruppe eines gattungsgemäßen BLDC-Motors aus einzelnen Statorsegmenten herzustellen. Die einzelnen Statorsegmente sehen typischerweise jeweils einen Spulenkörper und eine Wicklung vor. Die Spulenkörper werden dabei vor dem Verbinden beziehungsweise Fügen der Statorsegmente bewickelt. Die Wicklung können dann mit der sogenannten Linearwickeltechnik kostengünstig hergestellt werden. Das Fügen der Statorsegmente ist jedoch vergleichsweise aufwendig. Es erfolgt beispielsweise formschlüssig, indem die einzelnen Statorsegmente axial miteinander verbunden werden. Darüber hinaus kann eine radiale Montage erfolgen. Im Rahmen der radialen Montage ist zwischen den Statorsegmenten selbst kein Formschluss ausgebildet. Die Fixierung beziehungsweise Verbindung der Statorsegmente erfolgt bevorzugt stoffschlüssig, beispielsweise durch ein Laser- oder WIG-Schweißverfahren. Um die Statorsegmente vor dem Verbinden in Position zu halten, können die Statorsegmente umgreifende Halteringe oder andere Hilfsmittel beziehungsweise Werkzeuge eingesetzt werden.

Aufgabe der vorliegenden Erfindung ist es, einen gleichermaßen kompakt bauenden und kostengünstigen BLDC-Motor anzugeben.

Zur Lösung der Aufgabe weist die Erfindung die Merkmale des Patentanspruchs 1 auf. Weitere vorteilhafte Ausführungsformen der Erfindung ergeben sich aus den Unteransprüchen.

Der erfindungsgemäße dreiphasige BLDC-Motor sieht beispielsweise einen Ringmagneten als Permanentmagnet vor. Beispielsweise ist der Permanentmagnet vierpolig ausgebildet.

Bei dem dreiphasigen BLDC-Motor mit einem vierpoligen Permanentmagneten bilden bevorzugt sechs Statorsegmente mit jeweils einem Statorzahn, mit jeweils einem Polschuh, mit jeweils einem den Statorzahn umgreifenden Spulenkörper und mit jeweils einer Wicklung je Spulenkörper die Statorbaugruppe.

Die Wicklungen können bevorzugt als Kupferdrahtwicklung oder alternativ als Aluminiumdrahtwicklung ausgeführt sein. Der Spulenkörper kann beispielsweise um den Statorzahn herumgespritzt werden.

Bevorzugt wird der Blechstator aus in die Axialrichtung gestapelten Statorblechen hergestellt. Alle Statorsegmente und/oder alle Statorbleche können zur Realisierung einer besonders kostengünstigen Ausführungsform des BLDC-Motors identisch ausgebildet sein.

Nach einer Weiterbildung der Erfindung ist eine axiale Länge des Permanentmagneten um wenigstens 5 mm größer als eine in die Axialrichtung bestimmte Höhe der Statorzähne. Bevorzugt hat der Permanentmagnet eine axiale Länge von maximal 18 mm und besonders bevorzugt von 15 mm oder weniger.

Eine kostenmäßig besonders favorisierte und zugleich äußerst kompakt bauende Ausführungsform des BLDC-Motors sieht einen Permanentmagneten mit einer axialen Länge von 13 mm und Statorzähne mit einer Höhe von 8 mm vor. Es ergibt sich dann ein Verhältnis der axialen Länge des Permanentmagneten zu der Höhe der Statorzähne von 1,625.

Weitergehende Untersuchungen haben gezeigt, dass ähnliche Vorteile auch bei einem geringfügig anderen Verhältnis der axialen Länge des Permanentmagneten zu der Höhe der Statorzähne erreicht werden. Im Intervall von 1,6 bis 1,65 sind die Unterschiede Kosten und Bauraum gering.

Sofern die Wicklungen als Kupferdrahtwicklungen ausgeführt sind, ergibt sich eine vorteilhaft günstige und kompakte Ausführungsform des BLDC-Motors bei einem Verhältnis des Gewichts des Kupferdrahts aller Kupferdrahtwicklungen zu dem Gewicht des Blechstators von 0,525 bis 0,675 und bevorzugt von 0,58 bis 0,63. Das Gewicht aller Kupferdrahtwicklungen beträgt bevorzugt 30 g ± 2 g. Das Gewicht des Blechstators liegt im Bereich von 46,5 g bis 53 g.

Da bei einer kostenoptimierten Gestaltung des Blechstators neben der Blechmenge beziehungsweise dem Gewicht auch die Verteilung eine große Rolle spielt, wurden auch hier umfangreiche Untersuchungen angestrengt. Dabei hat sich gezeigt, dass eine Zahnbreite des Statorzahns wenigstens einer Jochbreite des Statorjochs entsprechen sollte. Beispielsweise können der Statorzahn und das Statorjoch gleich breit ausgebildet sein. Vorteile ergeben sich hier insbesondere bei der Parkettierung der Statorbleche mit der Folge, dass die Statorbleche kostengünstig hergestellt werden können und die Motorkosten insgesamt sinken.

Nach einer Weiterbildung der Erfindung beträgt ein Verhältnis eines Außenradius des Permanentmagnetrotors beziehungsweise des den Außenradius des Permanentmagnetrotors maßgeblich bestimmenden Ringmagneten zu einem Außenradius des Blechstators wenigstens 0,35 und bevorzugt 0,36 oder mehr. Besonders bevorzugt ist ein Verhältnis von 0,362, welches sich bei einem Außenradius des Permanentmagnetrotors beziehungsweise des Ringmagneten von 10,5 mm und einem Außenradius des Blechstators von 29 mm ergibt.

Bei dem erfindungsgemäßen BLDC-Motor kann der Außenradius des Permanentmagnetrotors geringfügig größer sein als der Außenradius des Ringmagneten. Dies ist der Fall, wenn der Ringmagnet umspritzt beziehungsweise vergossen wird und mantelseitig einen dünnen Überzug erhält. Eine Dicke des Überzugs liegt typischerweise bei 1 mm oder weniger.

Eine Polabdeckung des dreiphasigen BLDC-Motors mit dem vierpoligen Permanentmagneten entspricht vorteilhaft 0,8 ± 0,05. Sie ist definiert als das Verhältnis eines Polwinkels der Polschuhe zu einem Teilungswinkel des Blechstators beziehungsweise der Statorbaugruppe, der bei der Verwendung von sechs identischen Statorsegmenten 60° beträgt.

Nach einer Weiterbildung der Erfindung sehen die Statorsegmente senkrecht zu der Radialrichtung eine jedenfalls abschnittsweise ebene, tangential zu der Umfangsrichtung orientierte Flanschfläche vor. Ein Verhältnis, das zwischen einem minimalen radialen Abstandsmaß der Flanschfläche zu dem Mittelpunkt der montierten Statorbaugruppe einerseits und dem Außenradius des Permanentmagnetrotors beziehungsweise des Ringmagneten andererseits gebildet ist, beträgt wenigstens 0,365 und bevorzugt 0,385 oder mehr. Der minimale radiale Abstand der Flanschfläche beträgt bevorzugt 26,25 mm ± 0,5 mm.

Nach einer Weiterbildung der Erfindung ist für den Spulenkörper eine Flanschwandstärke von 0,8 mm ± 0,2 mm und eine Mittenwandstärke von 0,8 mm ± 0,2 mm realisiert. Eine in die Radialrichtung bestimmte Spulenhöhe der Wicklung beträgt bevorzugt 6,7 mm ± 0,2 mm. Senkrecht hierzu bestimmt ist die Spulenbreite. Sie liegt bevorzugt im Bereich von 3,9 mm ± 0,1 mm.

Ein Luftspaltmaß zwischen einer der Rotorbaugruppe zugewandten gekrümmten Oberfläche der Polschuhe und dem Permanentmagnetrotor ist anwendungsabhängig so bestimmt, dass bei einem nasslaufenden Permanentmagnetrotor eine Wandung eines Spaltrohrtopfs zwischen dem Polschuh und dem Permanentmagnetrotor vorgesehen werden kann. Das Luftspaltmaß beträgt dann beispielsweise 1,3 mm ± 0,1 mm.

Nach einer Weiterbildung der Erfindung ist an jedem Statorsegment eine Verbindungskontur vorgesehen. Bevorzugt ist die Verbindungskontur eingerichtet zum formschlüssigen Verbinden eines Statorsegments mit einem benachbarten Statorsegment. Die formschlüssige Verbindung der Statorsegmente wird beispielsweise realisiert, indem die Verbindungskontur einmal durch eine nasenförmige Ausformung und einmal durch eine korrespondierend zu der nasenförmigen Ausformung geformte Aufnahmenut gebildet ist, in die die nasenförmige Ausformung eingreift.

Nach einer Weiterbildung der Erfindung sieht jedes Statorsegment zwei Verbindungskonturen vor, welche an zwei einander gegenüberliegenden freien Enden eines Jochabschnitts des Statorsegments vorgesehen sind. Bevorzugt sieht jedes Statorsegment einmal eine nasenförmige Ausformung und einmal eine Aufnahmenut vor.

Nach einer Weiterbildung der Erfindung sind eine Geometrie der nasenförmigen Ausformung und der Aufnahmenut bezogen auf eine senkrecht zu der Axialrichtung definierte Querschnittsebene der Statorbaugruppe so aufeinander abgestimmt, dass beim gleichzeitigen und synchronen radialen Fügen aller Statorsegmente die nasenförmigen Ausformungen der Statorsegmente kollisionsfrei in die Aufnahmenuten der benachbarten Statorsegmente eingesetzt werden. Im gefügten Zustand ist dann ein radiales Entfernen eines einzelnen Statorsegments aus der gefügten Statorbaugruppe aufgrund einer Hinterschneidung, die die Aufnahmenuten und die hierein eingreifenden nasenförmigen Ausformungen ausbilden, nicht möglich. Es ergibt sich insofern beim radialen Fügen der Statorsegmente aufgrund der speziellen Geometrie der Verbindungskonturen ein Formschluss. Ein Auflösen des Formschlusses ist nur möglich, wenn die einzelnen Statorsegmente in Umkehrung des Fügeprozesses gleichzeitig und synchron radial nach außen bewegt werden. Das radiale Entfernen eines einzigen Statorsegments ist demgegenüber blockiert. Vorteilhaft ergibt sich hierdurch eine kostengünstige Möglichkeit der Fertigung der Statorbaugruppe. Es kann auf das deutlich aufwendigere sequentielle axiale Verbinden der Statorsegmente zur Herstellung einer formschlüssigen Verbindung derselben verzichtet werden.

Um in diesem Fall die Herstellung der Statorbaugruppe zu realisieren, werden die Statorsegmente zunächst in Umfangsrichtung verteilt und in die Umfangsrichtung beabstandet zueinander so positioniert, dass alle Statorsegmente in der senkrecht zu der Axialrichtung definierten Querschnittsebene angeordnet sind, dass alle Statorsegmente einen gleichen Abstand zu einem Mittelpunkt aufweisen und dass die Statorzähne auf den Mittelpunkt ausgerichtet sind. Dann werden die Statorsegmente gleichzeitig und synchron, das heißt mit einem stets gleichen Abstand zum Mittelpunkt beziehungsweise mit einer gleichen Geschwindigkeit radial auf den Mittelpunkt zubewegt. Hierbei werden die nasenförmigen Ausformungen kollisionsfrei in die Aufnahmenuten eingesetzt und benachbarte Statorsegmente, welche aneinander anliegen, formschlüssig verbunden. Die Statorsegmente behalten bei der radialen Fügebewegung in Richtung des Mittelpunkts ihre Ausrichtung beziehungsweise Orientierung zum Mittelpunkt.

Der erfindungsgemäße BLDC-Motor dient beispielsweise als Antrieb für eine elektrische Fluidpumpe. Die mit dem erfindungsgemäßen BLDC-Motor angetriebene Fluidpumpe wird beispielsweise im Bereich der Haustechnik, insbesondere als Heizungspumpe, und bevorzugt in einem wasserführenden Haushaltsgerät, insbesondere einer Waschmaschine, einer Spülmaschine oder einem Gargerät verwendet.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung. Sie haben keinen einschränkenden Charakter.

Es zeigen:
- Fig. 1: eine Stirnseitenansicht eines BLDC-Motors mit einer Statorbaugruppe und einer koaxial zu dieser angeordneten Rotorbaugruppe,
- Fig. 2: eine Mehrzahl von Statorsegmenten der Statorbaugruppe des BLDC-Motors nach Fig. 1, welche vor dem Fügen der Statorbaugruppe in eine Umfangsrichtung verteilt und in die Umfangsrichtung beabstandet zueinander positioniert sind,
- Fig. 3: eine Teilansicht eines Statorsegments ohne Wicklung,
- Fig. 4: eine Aufsicht auf ein Statorblech eines Statorsegments in einer ersten Ausführungsform,
- Fig. 5: eine alternative Ausführungsform eines Statorblechs,
- Fig. 6: eine Prinzipdarstellung eines ersten Schritts eines Fügeprozesses für die Statorbaugruppe,
- Fig. 7: eine Prinzipdarstellung eines zweiten Schritts des Fügeprozesses für die Statorbaugruppe,
- Fig. 8: eine Prinzipdarstellung eines dritten Schritts des Fügeprozesses für die Statorbaugruppe,
- Fig. 9: eine Prinzipdarstellung eines vierten Schritts des Fügeprozesses für die Statorbaugruppe
- Fig. 10: eine vergrößerte Teilansicht von zwei Statorsegmenten beim Fügen,
- Fig. 11: eine Teilansicht des Statorsegments und die Rotorbaugruppe des BLDC-Motors in einer Prinzipdarstellung und
- Fig. 12: die Statorbaugruppe des BLDC-Motors nach dem Fügen.

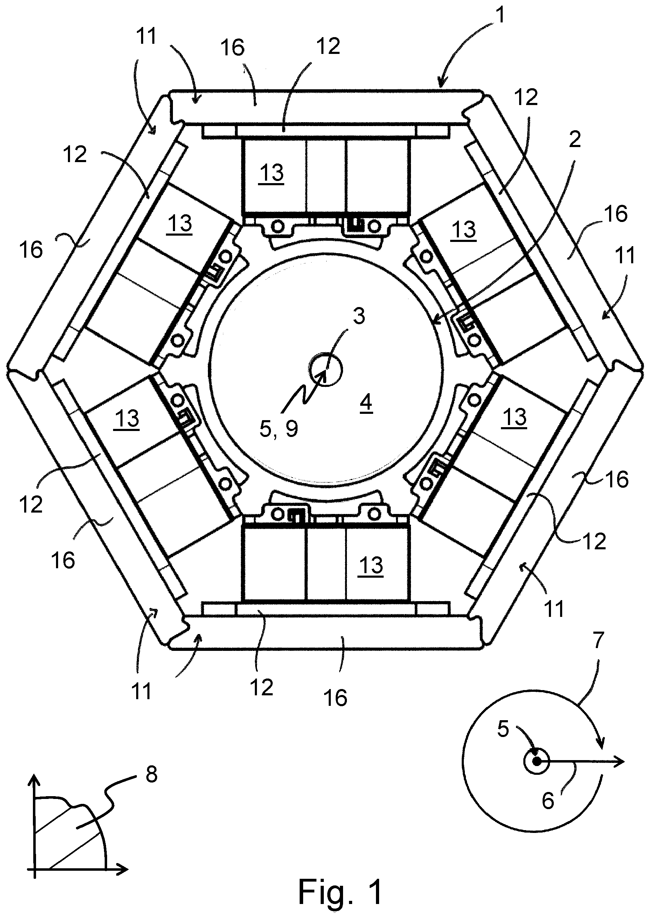

Figur 1 zeigt eine Stirnseitenansicht eines BLDC-Motors mit einer Statorbaugruppe 1 und einer koaxial zu der Statorbaugruppe 1 angeordneten Rotorbaugruppe 2.

Die Statorbaugruppe 1 umfasst einen Blechstator, eine Mehrzahl von Spulenkörpern 12 und eine Mehrzahl von Wicklungen 13, die die Spulenkörper 12 umgreifen. Der Blechstator ist segmentiert ausgebildet. Die Statorbaugruppe 1 sieht insofern eine Mehrzahl von Statorsegmenten 11 vor, welche im montierten Zustand in einer Umfangsrichtung 7 aneinander angesetzt sind und die Statorbaugruppe 1 bilden.

Jedes Statorsegment 11 sieht in einer Axialrichtung 5 gestapelte Statorbleche vor, welche einen Teil des Statorjochs (Jochabschnitt 16), einen Statorzahn 14 und einen Polschuh 15 bereitstellen. Der Spulenkörper 12 eines jeden Statorsegments 11 umgreift den Statorzahn 14. Bevorzugt sind die Spulenkörper 12 um den Statorzahn 14 gespritzt.

Die Rotorbaugruppe 2 sieht eine in die Axialrichtung 5 längserstreckte Motorwelle 3 und einen an der Motorwelle 3 montierten Permanentmagnetrotor 4 vor. Beispielsweise ist der Permanentmagnetrotor 4 fest mit der Motorwelle 3 verbunden. Die Rotorbaugruppe 2 ist koaxial zur Statorbaugruppe 1 angeordnet.

Der Permanentmagnetrotor 4 sieht einen Permanentmagneten vor, der im vorliegenden Ausführungsbeispiel der Erfindung als ein vierpoliger Ringmagnet ausgebildet ist. Eine axiale Länge des Permanentmagneten ist größer als eine in die Axialrichtung 5 bestimmte Höhe der Statorzähne 14. Beispielsweise beträgt die axiale Länge des Permanentmagneten 13 mm und die in die Axialrichtung 5 bestimmte Höhe der Statorzähne 14 8 mm. Bezogen auf die Axialrichtung 5 überragt der Permanentmagnet die Statorzähne dabei bevorzugt gleichmäßig zu beiden Seiten.

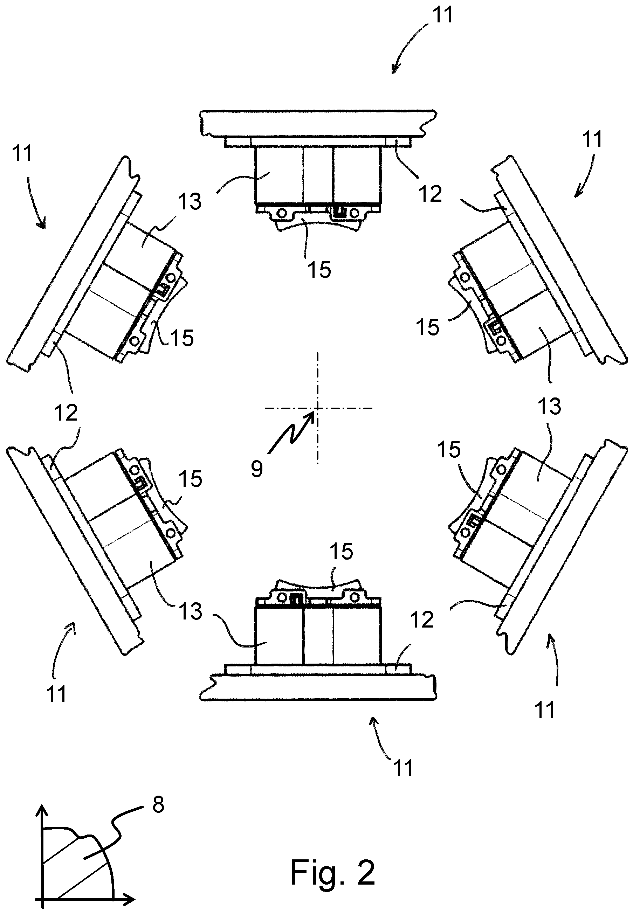

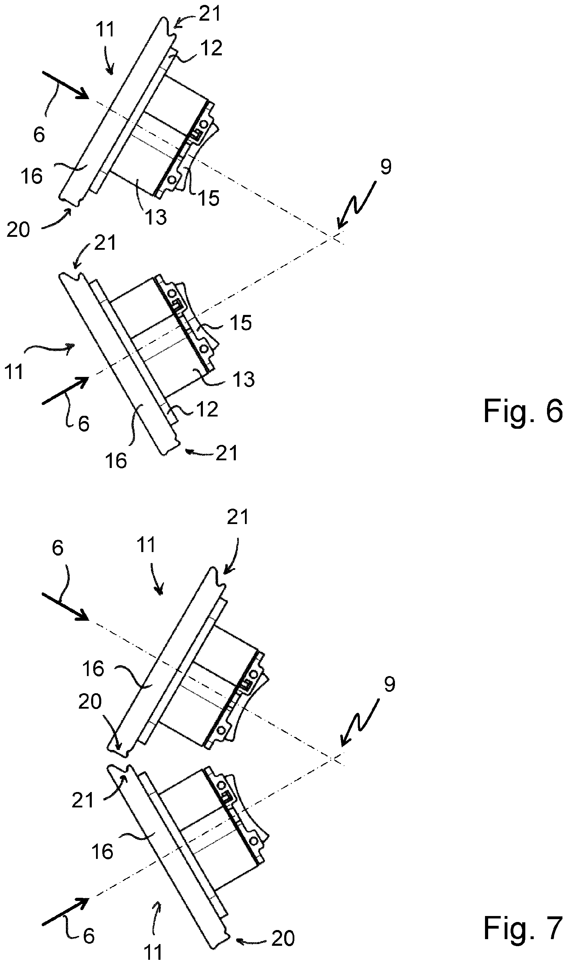

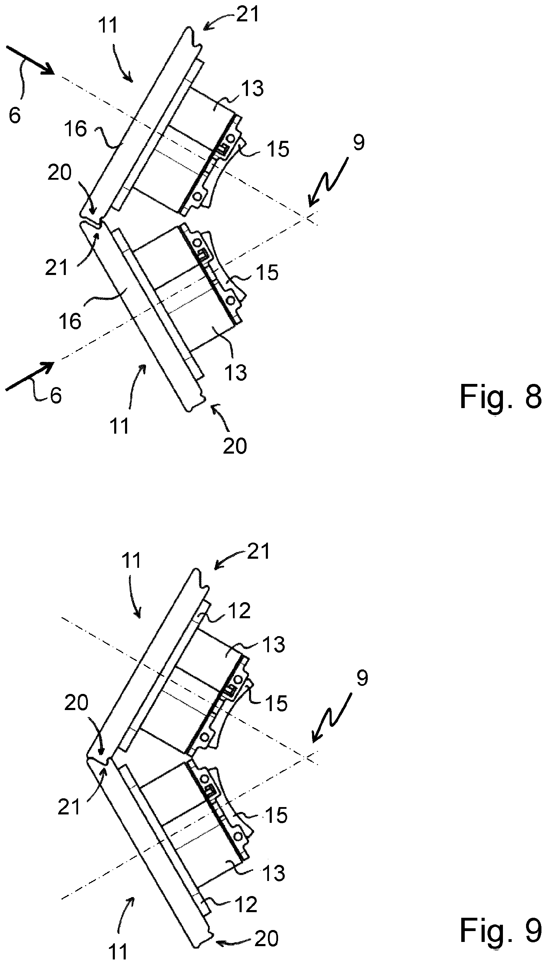

Den detaillierten Aufbau der Statorbaugruppe 1 zeigt Figur 2. Insgesamt sechs baugleiche Statorsegmente 11 werden in die Umfangsrichtung 7 aneinander angelegt und bilden dann die Statorbaugruppe 1. Das Fügeverfahren erfolgt, wie ausschnittsweise für zwei der sechs Statorsegmente 11 in den Figuren 6 bis 9 dargestellt ist, indem alle sechs Statorsegmente 11 in einer senkrecht zur der Axialrichtung 5 bestimmen Querschnittsebene 8 positioniert werden und dabei einen gleichen Abstand zu einem Mittelpunkt 9 aufweisen. Die Statorzähne 14 sind auf den Mittelpunkt ausgerichtet. Die Verteilung in die Umfangsrichtung 7 erfolgt so, dass die Statorsegmente 11 zueinander beabstandet und gleich verteilt angeordnet sind.

Zum Fügen werden dann alle Statorsegmente 11 gleichzeitig und synchron radial auf den Mittelpunkt 9 zubewegt, bis an zwei aneinander gegenüberliegenden freien Enden des Jochabschnitts 16 gebildete Verbindungskonturen formschlüssig ineinandergreifen und die vormals beabstandeten benachbarten Statorsegmente 11 aneinander anliegen zur Bildung der Statorbaugruppe 1.

Die Verbindungskonturen werden zum einen durch eine nasenförmige Ausformung 20 und zum anderen durch eine korrespondierend zu der nasenförmigen Ausformung 20 geformte Aufnahmenut 21 gebildet, die die nasenförmige Ausformung 20 aufnimmt. Beim gleichzeitigen und synchronen radialen Fügen aller Statorsegmente 11 werden die nasenförmigen Ausformungen 20 kollisionsfrei in die korrespondierenden Aufnahmenuten 21 eingesetzt. Ein radiales Entfernen eines einzelnen Statorsegments 11 aus der gefügten Statorbaugruppe 1 ist aufgrund der Hinterschneidungen, die die Aufnahmenut 21 des zu entfernenden Statorsegments 11 und die hierein eingreifende nasenförmige Ausformung 20 des benachbarten Statorsegments 11 einerseits und die nasenförmige Ausformung 20 des zu entfernenden Statorsegments 11 und die Aufnahmenut 21 des benachbarten Statorsegments 11 andererseits bilden, blockiert und nicht möglich. Ein einzelnes Statorsegment kann demzufolge aus der fertig montierten Statorbaugruppe 1 nicht radial entnommen werden. Stattdessen müssten alle Statorsegmente 11 synchron radial nach außen bewegt werden, um die formschlüssige Verbindung der Statorsegmente 11 im Bereich der Verbindungskonturen zu lösen. Alternativ bleibt, ein einzelnes Statorsegment 11 axial aus der Statorbaugruppe 1 herauszuschieben.

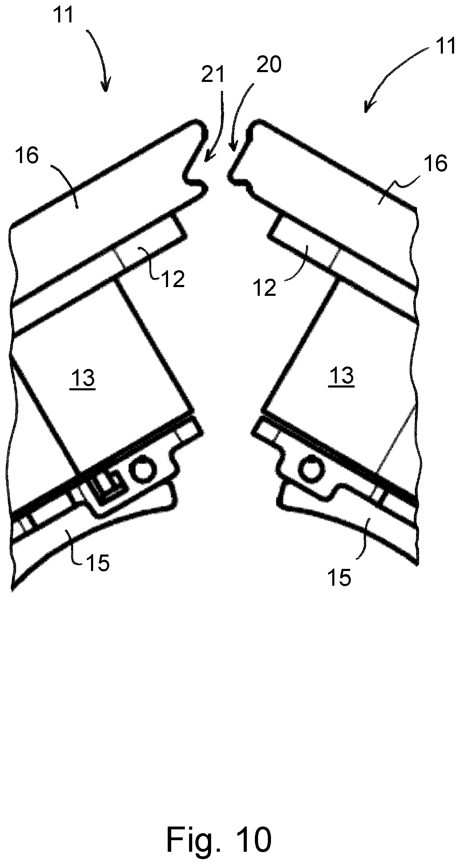

Die spezielle Geometrie der Verbindungskontur ist vergrößert noch einmal in der Figur 10 dargestellt. Hierbei wird die Nasenform der Ausformung 20 und die korrespondierende Gestalt der Aufnahmenut 21 deutlich. Die Kontur ist so gewählt, dass beim radialen Fügen infolge der Radialbewegung die freien Enden benachbarter Jochabschnitte 16 sich in Umfangsrichtung annähern. Die überlagerte Radialbewegung aller Statorsegmente 11 sorgt dabei dafür, dass ein kollisionsfreies Fügen möglich wird.

Demgegenüber wäre ein sequentielles kollisionsfreies radiales Fügen der einzelnen Statorsegmente 11 wie das radiale Entnehmen eines einzigen Statorsegments 11 aus der fertig montierten Statorbaugruppe 1 aufgrund der Hinterschneidung nicht möglich.

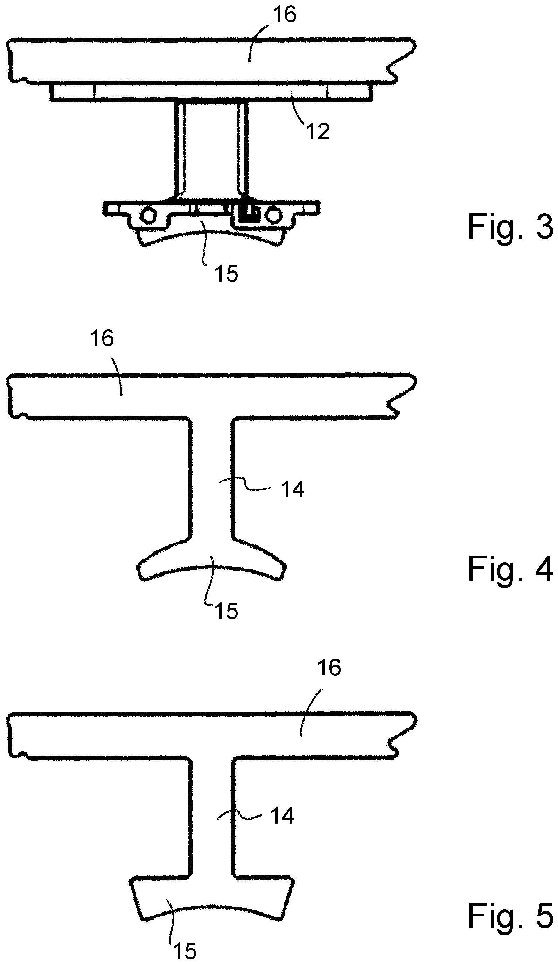

Figur 3 zeigt eine Teilansicht des Statorsegments 11. Dargestellt sind die in die Axialrichtung 5 geschichteten Statorbleche mit dem Spulenkörper 12, welche die Statorbleche im Bereich des Statorzahns 14 umgreifen. Nicht dargestellt ist die Wicklung 13 des Statorsegments 11.

Zwei alternative Ausführungsformen der Statorbleche sind in den Figuren 4 und 5 dargestellt. Sie unterscheiden sich insbesondere in Bezug auf die Geometrie der Polschuhe 15.

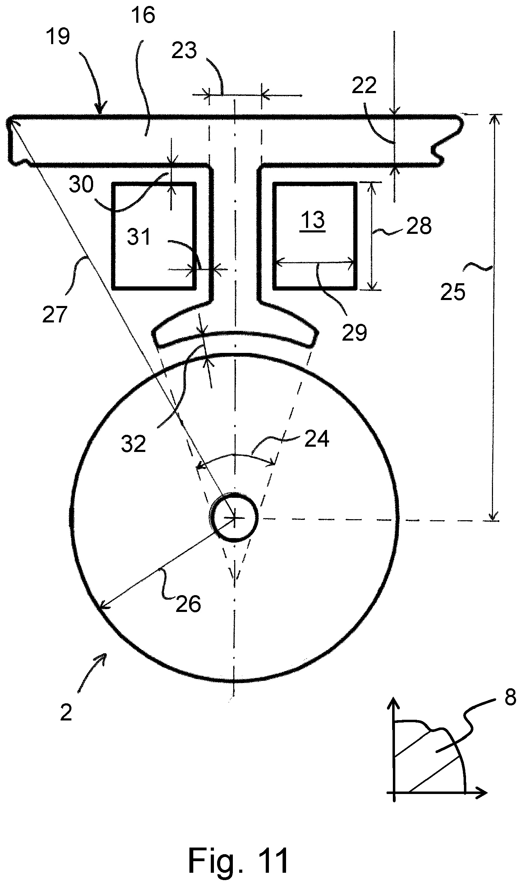

Figur 11 zeigt einige geometrische Größen des BLDC-Motors in einer Prinzipdarstellung. Hierbei ist auf die Darstellung des Spulenkörpers 12 verzichtet worden, um insbesondere die wesentlichen geometrischen Abmessungen der Wicklung 13 selbst darzustellen. Eine Spulenhöhe 28 beträgt vorliegend nominell 6,7 mm. Eine senkrecht hierzu bestimmte Spulenbreite 29 beträgt - bezogen auf den Querschnitt einer Halbwicklung - 3,9 mm.

Eine Flanschwandstärke 30 des Spulenkörpers 12, welche in Fig. 11 durch den Spalt zwischen der Wicklung 13 und dem Jochabschnitt 16 des Statorsegments 11 visualisiert ist, beträgt im vorliegenden Ausführungsbeispiel der Erfindung nominell 0,8 mm. Ebenfalls 0,8 mm beträgt eine Mittenwandstärke 31 des Spulenkörpers 12, die in Fig. 11 durch den Spalt zwischen der Wicklung 13 und dem Statorzahn 14 kenntlich gemacht ist.

Eine Jochbreite 22 und eine Zahnbreite 23 des Statorsegments 11 sind vorliegend mit jeweils 3 mm gleich groß. Exemplarisch liegt ein Öffnungswinkel 24 der Polschuhe, der sich durch die gegeneinander angestellten freien Endflächen derselben definiert, bei nominell 34°.

Ein Außenradius des Permanentmagnetrotors 4, welcher im Wesentlichen dem Außenradius 26 des Ringmagneten entspricht, beträgt 10,5 mm. Ein Außenradius 27 des Blechstators beträgt 29 mm. Ein Verhältnis des Außenradius 26 des Ringmagneten beziehungsweise des Permanentmagnetrotors 4 zu dem Außenradius 27 des Blechstators liegt demzufolge bei 0,362.

Ein vom Mittelpunkt 9 der Statorbaugruppe 1 beziehungsweise der Motorwelle 3 bestimmtes radiales Abstandsmaß 25 zu einer ebenen Flanschfläche 19 der Statorsegmente 11 liegt im Bereich von 25,75 bis 26,75 mm.

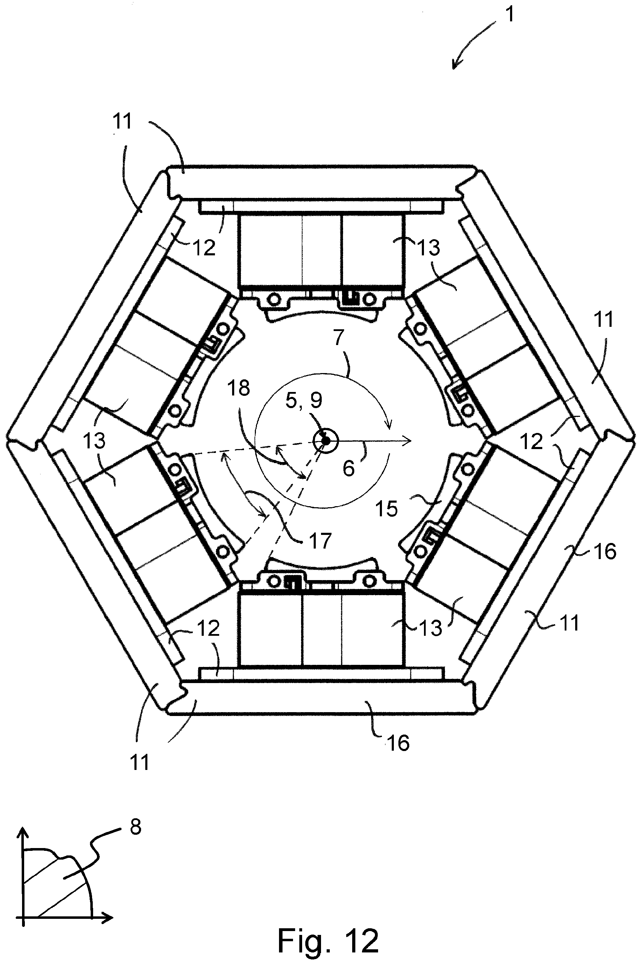

Schließlich zeigt Figur 12 die fertig montierte Statorbaugruppe 1. Hier ist zu erkennen, dass der Stator eine Polüberdeckung von 0,8 hat. Sie definiert sich als Verhältnis eines Polwinkels 17 zu einem Teilungswinkel 18. Der Teilungswinkel 18 ist durch die sechs Statorsegmente 11 definiert und beträgt 60°. Der Polwinkel 17, welcher anders als der Öffnungswinkel 24 vom Mittelpunkt 9 ausgehend bestimmt wird, beträgt 48°.

Gleiche Bauteile und Bauteilfunktionen sind durch gleiche Bezugszeichen gekennzeichnet.

### Bezugszeichenliste

- 1: Statorbaugruppe
- 2: Rotorbaugruppe
- 3: Motorwelle
- 4: Permanentmagnetrotor
- 5: Axialrichtung
- 6: Radialrichtung
- 7: Umfangsrichtung
- 8: Querschnittsebene
- 9: Mittelpunkt
- 11: Statorsegment
- 12: Spulenkörper
- 13: Wicklung
- 14: Statorzahn
- 15: Polschuh
- 16: Jochabschnitt
- 17: Polwinkel
- 18: Teilungswinkel
- 19: Flanschfläche
- 20: nasenförmige Ausformung
- 21: Aufnahmenut
- 22: Jochbreite
- 23: Zahnbreite
- 24: Öffnungswinkel
- 25: radiales Abstandsmaß
- 26: Außenradius des Ringmagneten
- 27: Außenradius des Blechstators
- 28: Spulenhöhe
- 29: Spulenbreite
- 30: Flanschwandstärke
- 31: Mittenwandstärke
- 32: Luftspaltmaß

## Patentansprüche

1. Dreiphasiger BLDC-Motor umfassend eine Rotorbaugruppe (2) mit einer in eine Axialrichtung (5) längserstreckten Motorwelle (3) und mit einem an der Motorwelle (3) montierten Permanentmagnetrotor (4) mit einem mehr als zweipoligen Permanentmagneten und umfassend eine Statorbaugruppe (1) mit einem Blechstator, mit einer Mehrzahl von Spulenkörpern (12) und mit einer Mehrzahl von Wicklungen (13), die die Spulenkörper (12) umgreifen, wobei der Blechstator segmentiert ausgebildet ist und die Statorbaugruppe (1) eine Mehrzahl von Statorsegmenten (11) vorsieht, welche in eine Umfangsrichtung (7) aneinander angesetzt sind und welche jeweils einen Teil eines Statorjochs und einen Statorzahn (14) mit einem Polschuh (15) bereitstellen, wobei jeder Statorzahn (14) einen der Spulenkörper (12) mit einer Wicklung (13) trägt und wobei jedes Statorsegment (11) in die Axialrichtung (5) gestapelte Statorbleche vorsieht.

2. Motor nach Anspruch 1, **dadurch gekennzeichnet, dass** die Statorbaugruppe (1) sechs Statorsegmente (11) aufweist, wobei bevorzugt alle Statorsegmente (11) und/oder alle Statorbleche der Statorbaugruppe (1) identisch ausgebildet sind und/oder die Statorsegmente (11) in die Umfangsrichtung (7) gleichmäßig verteilt angeordnet sind.

3. Motor nach Anspruch 1 oder 2, **dadurch gekennzeichnet, dass** der Permanentmagnet des Permanentmagnetrotors (4) als ein Ringmagnet ausgebildet ist und/oder dass der Permanentmagnet vierpolig oder achtpolig ausgebildet ist.

4. Motor nach einem der Ansprüche 1 bis 3, **dadurch gekennzeichnet, dass** eine axiale Länge des Permanentmagneten wenigstens 5 mm größer ist als eine in die Axialrichtung (5) bestimmte Höhe der Statorzähne (14).

5. Motor nach einem der Ansprüche 1 bis 4, **dadurch gekennzeichnet, dass** der Permanentmagnet eine axiale Länge von maximal 18 mm und bevorzugt von 15 mm oder weniger und besonders bevorzugt von 13 mm aufweist.

6. Motor nach einem der Ansprüche 1 bis 5, **dadurch gekennzeichnet, dass** ein Verhältnis der axialen Länge des Permanentmagneten zu der Höhe der Statorzähne zwischen 1,6 und 2,3 und bevorzugt im Bereich von 1,625 ± 0,025 liegt.

7. Motor nach einem der Ansprüche 1 bis 6, **dadurch gekennzeichnet, dass** ein Verhältnis eines Außenradius (26) des Permanentmagnetrotors (4) und/oder des Ringmagneten zu einem Außenradius (27) des Blechstators wenigstens 0,35 und bevorzugt 0,36 oder mehr beträgt.

8. Motor nach einem der Ansprüche 1 bis 7, **dadurch gekennzeichnet, dass** der Außenradius (26) des Permanentmagnetrotors (4) und/oder des Ringmagneten 10,5 mm ± 1 mm beträgt und/oder dass der Außenradius (27) des Blechstators 29 mm ± 2 mm beträgt.

9. Motor nach einem der Ansprüche 1 bis 8, **dadurch gekennzeichnet, dass** eine Polabdeckung von 0,8 ± 0,05 realisiert ist.

10. Motor nach einem der Ansprüche 1 bis 9, **dadurch gekennzeichnet, dass** die Statorsegmente (11) bezogen auf eine Radialrichtung (6) eine jedenfalls abschnittsweise ebene Flanschfläche (19) vorsehen und dass ein Verhältnis eines minimalen radialen Abstandsmaßes (25) der Flanschfläche (19) zum Außenradius (26) des Ringmagneten wenigstens 0,365 und bevorzugt 0,385 oder mehr beträgt.

11. Motor nach einem der Ansprüche 1 bis 10, **dadurch gekennzeichnet, dass** das minimale radiale Abstandsmaß (25) der Flanschfläche 26,25 mm ± 0,5 mm beträgt.

12. Motor nach einem der Ansprüche 1 bis 11, **dadurch gekennzeichnet, dass** die Wicklungen (13) als Kupferdrahtwicklungen hergestellt sind und/oder dass ein Verhältnis des Gewichts des Kupferdrahts aller Kupferdrahtwicklungen zum Gewicht des Blechstators 0,6 ± 0,075 beträgt.

13. Motor nach einem der Ansprüche 1 bis 12, **dadurch gekennzeichnet, dass** das Gewicht aller Kupferdrahtwicklungen 30 g ± 2 g beträgt und/oder dass das Gewicht des Blechstators im Bereich von 46,5 bis 53 g liegt.

14. Motor nach einem der Ansprüche 1 bis 13, **dadurch gekennzeichnet, dass** eine Zahnbreite (23) des Statorzahns (14) wenigstens einer Jochbreite (22) des Statorjochs entspricht und/oder dass der Statorzahn (14) und das Statorjoch gleich breit ausgeführt sind.

15. Motor nach einem der Ansprüche 1 bis 14, **dadurch gekennzeichnet, dass** an jedem Statorsegment (11) eine Verbindungskontur vorgesehen ist, wobei die Verbindungskontur eingerichtet ist zum formschlüssigen Verbinden des Statorsegments (11) mit einem benachbarten Statorsegment (11) und wobei alle Statorsegmente (11) in Bezug auf die Verbindungskontur identisch ausgebildet sind.

16. Verwendung eines BLDC-Motors nach einem der Ansprüche 1 bis 15 zum Antreiben einer Fluidpumpe in einem wasserführenden Haushaltsgerät, insbesondere einer Waschmaschine, einer Spülmaschine oder einem Gargerät.
